# EUROPEAN PATENT APPLICATION

(11) **EP 4 604 463 A1**
(43) Date of publication of application: **20.08.2025**
(21) Application number: 22961688.3
(22) Date of filing: 11.10.2022
(51) Int. Cl.: H04L 27/00, H04W 8/24

(54) **METHOD AND APPARATUS FOR TRANSMITTING CAPABILITY INFORMATION, AND READABLE STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Dehns Germany Partnerschaft mbB
(86) International application number: PCT/CN2022/124716
(87) International publication number: WO 2024/077495

(57) **Abstract**

The present disclosure provides a method and apparatus for transmitting capability information, and a readable storage medium. The method comprises: sending capability information to a network device, wherein the capability information comprises a radio frequency capability when a user equipment is in a first state. According to the method of the present disclosure, the user equipment reports the radio frequency capability in the first state by sending the capability information to the network device, so that the network device can learn about the radio frequency capability of the user equipment in the first state, and the network device can perform more rational scheduling in accordance with the state of the user equipment, thereby achieving the radio frequency performance of the user equipment in a related state.

## Description

### FIELD

The present disclosure relates to the field of wireless communication technologies, in particular to a capability information transmission method and device, and a readable storage medium.

### BACKGROUND

In a multiple input multiple output (MIMO) technology, a transmitting terminal and a receiving terminal use multiple transmitting antennas and receiving antennas, respectively. At the transmitting terminal or the receiving terminal, signals may be transmitted and received through multiple antennas, thus improving the communication quality.

For user equipment (UE) with different radio frequency capabilities, a network device may configure a numeric count of MIMO layers of the UE. With the development of technology, the same user equipment may have a variety of state changes, such as a foldable screen device. It is necessary to know the radio frequency capabilities of such user equipment in different states.

### SUMMARY

The present disclosure provides a capability information transmission method and device, and a readable storage medium.

In a first aspect, the present disclosure provides a method for transmitting capability information, which is performed by user equipment, and includes:
transmitting capability information to a network device, in which the capability information includes a radio frequency capability of the user equipment in a first state.

In the method of the present disclosure, the user equipment reports the radio frequency capability in the first state by transmitting the capability information to the network device, so that the network device may know the radio frequency capability of the user equipment in the first state, which is beneficial for the network device to make more reasonable scheduling in combination with the state of the user equipment, thus exerting the radio frequency performance of the user equipment in the relevant state.

In some possible embodiments, the capability information further includes a radio frequency capability of the user equipment in a second state.

In some possible embodiments, transmitting the capability information to the network device includes:
transmitting first capability information and second capability information to the network device, in which the first capability information includes the radio frequency capability of the user equipment in the first state, and the second capability information includes the radio frequency capability of the user equipment in the second state.

In some possible embodiments, transmitting the capability information to the network device includes:
transmitting the capability information to the network device in a case that a type of the user equipment is a first type,
in which a state of the user equipment of the first type includes the first state and the second state.

In some possible embodiments, the method further includes:
transmitting first indication information to the network device, in which the first indication information indicates the type of the user equipment.

In some possible embodiments, the method further includes:
transmitting second indication information to the network device, in which the second indication information indicates a state of the user equipment.

In some possible embodiments, transmitting the second indication information to the network device includes:
transmitting the second indication information to the network device in a case that the state of the user equipment changes.

In some possible embodiments, transmitting the second indication information to the network device includes:
transmitting the second indication information to the network device in a case that an uplink channel environment and/or an uplink traffic volume do not meet conditions.

In some possible embodiments, transmitting the capability information to the network device includes:
transmitting the capability information to the network device in a case of transmitting the second indication information.

In some possible embodiments, the radio frequency capability includes at least one of:
a numeric count of uplink multiple input multiple output (MIMO) layers supported by the user equipment;
a numeric count of downlink MIMO layers supported by the user equipment; or
an uplink power class supported by the user equipment.

In a second aspect, the present disclosure provides a method for receiving capability information, which is performed by a network device, and includes:
receiving capability information transmitted by user equipment, in which the capability information includes a corresponding radio frequency capability of the user equipment in a first state; and
performing scheduling according to the capability information.

In the method of the present disclosure, the network device knows the radio frequency capability of the user equipment in the first state through the received capability information, which is beneficial for the network device to make more reasonable scheduling in combination with the state of the user equipment, thus exerting the radio frequency performance of the user equipment 101 in the relevant state.

In some possible embodiments, receiving the capability information transmitted by the user equipment includes:
receiving first capability information and second capability information transmitted by the user equipment, in which the first capability information includes the radio frequency capability of the user equipment in the first state, and the second capability information includes a radio frequency capability of the user equipment in a second state.

In some possible embodiments, the method further includes:
receiving first indication information transmitted by the user equipment, in which the first indication information indicates a type of the user equipment.

In some possible embodiments, receiving the capability information transmitted by the user equipment includes:
receiving the capability information in a case that the type of the user equipment is a first type, according to the first indication information.

In some possible embodiments, the method further includes:
receiving second indication information transmitted by the user equipment, in which the second indication information indicates a state of the user equipment.

In some possible embodiments, performing scheduling according to the capability information includes:
in a case of receiving the second indication information, determining a radio frequency capability corresponding to the state of the user equipment according to the second indication information and the capability information; and
determining configuration information according to the radio frequency capability corresponding to the state of the user equipment.

In some possible embodiments, the radio frequency capability includes at least one of:
a numeric count of uplink **MIMO** layers supported by the user equipment;
a numeric count of downlink **MIMO** layers supported by the user equipment; or
an uplink power class supported by the user equipment.

In a third aspect, the present disclosure provides a device for transmitting capability information, which may be used to perform the steps performed by the user equipment in the first aspect or any possible design of the first aspect. The user equipment may realize the functions in the above methods through a hardware structure, a software module, or a hardware structure plus a software module.

When the device described in the third aspect is implemented by a software module, the device may include a transceiving module, which may be used to support communication of the communication device.

When executing the steps in the first aspect, the transceiving module is configured to transmit capability information to a network device, and the capability information includes a radio frequency capability of the user equipment in a first state.

In a fourth aspect, the present disclosure provides a device for receiving capability information, which may be used to perform the steps performed by the network device in the second aspect or any possible design of the second aspect. The network device may realize the functions in the above methods through a hardware structure, a software module, or a hardware structure plus a software module.

When the device described in the fourth aspect is realized by a software module, the device may include a transceiving module and a processing module which are coupled with each other, in which the transceiving module may be used to support the communication of the communication device, and the processing module may be used for the communication device to perform processing operations, such as generating information/messages to be transmitted or processing received signals to obtain information/messages.

When executing the steps in the second aspect, the transceiving module is configured to receive capability information transmitted by the user equipment, in which the capability information includes a corresponding radio frequency capability of the user equipment in a first state; and
the processing module is configured to perform scheduling according to the capability information.

In a fifth aspect, the present disclosure provides a communication device, including a processor and a memory. The memory is configured to store computer programs. The processor is configured to execute the computer programs to realize the first aspect or any possible design of the first aspect.

In a sixth aspect, the present disclosure provides a communication device, including a processor and a memory. The memory is configured to store computer programs. The processor is configured to execute the computer programs to realize the second aspect or any possible design of the second aspect.

In a seventh aspect, the present disclosure provides a computer-readable storage medium, storing instructions (or computer programs, programs), which, when called for execution on a computer, cause the computer to execute the first aspect or any possible design of the first aspect.

In an eighth aspect, the present disclosure provides a computer-readable storage medium, storing instructions (or computer programs, programs), which, when called for execution on a computer, cause the computer to execute the second aspect or any possible design of the second aspect.

It is to be understood that both the foregoing general description and the following detailed description are illustrative and explanatory only, and are not restrictive of the present disclosure.

### BRIEF DESCRIPTION OF THE DRAWINGS

The accompanying drawings described herein are used to provide a further understanding of embodiments of the present disclosure and constitute a part of the present disclosure. The schematic implementations of the embodiments of the present disclosure and their descriptions are used to explain the embodiments of the present disclosure and do not constitute undue limitations on the embodiments of the present disclosure.

The accompanying drawings, which are incorporated herein and constitute a part of the specification, illustrate implementations consistent with the embodiments of the present disclosure, and serve to explain the principles of the embodiments of the present disclosure, together with the description.
Fig. 1 is a schematic diagram of an architecture of a wireless communication system provided by an embodiment of the present disclosure.
Fig. 2 is a flow chart of a capability information transmission method according to an illustrative embodiment.
Fig. 3 is a flow chart of a method for transmitting capability information according to an illustrative embodiment.
Fig. 4 is a flow chart of another method for transmitting capability information according to an illustrative embodiment.
Fig. 5 is a flow chart of another method for transmitting capability information according to an illustrative embodiment.
Fig. 6 is a flow chart of a method for receiving capability information according to an illustrative embodiment.
Fig. 7 is a flow chart of another method for receiving capability information according to an illustrative embodiment.
Fig. 8 is a flow chart of another method for receiving capability information according to an illustrative embodiment.
Fig. 9 is a block diagram of a device for transmitting capability information according to an illustrative embodiment.
Fig. 10 is a block diagram of user equipment according to an illustrative embodiment.
Fig. 11 is a block diagram of a device for receiving capability information according to an illustrative embodiment.
Fig. 12 is a block diagram of a communication device according to an illustrative embodiment.

### DETAILED DESCRIPTION

Embodiments of the present disclosure will now be further described with reference to the accompanying drawings and specific implementations.

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all the implementations consistent with the embodiments of the present disclosure. Rather, they are merely examples of devices and methods consistent with some aspects of the present disclosure as detailed in the appended claims.

The terms used in the embodiments of the present disclosure are for the purpose of describing specific embodiments only, and are not intended to limit the embodiments of the present disclosure. The singular forms "a" and "the" used in the embodiments of the present disclosure and the appended claims are also intended to include the plural forms, unless the context clearly indicates other meaning. It should also be understood that the term "and/or" as used herein refers to and includes any or all possible combinations of one or more associated listed items.

It should be understood that although the terms "first", "second", "third", etc. may be used to describe various information in the embodiments of the present disclosure, these information should not be limited to these terms. These terms are only used to distinguish information of the same type from each other. For example, without departing from the scope of the embodiments of the present disclosure, the first information may also be called the second information, and similarly, the second information may also be called the first information. Depending on the context, the words "if" as used herein may be interpreted as "when" or "while" or "in response to determining".

Hereinafter, the embodiments of the present disclosure will be described in detail, examples of which are illustrated in the accompanying drawings, in which the same or similar reference numerals indicate the same or similar elements throughout. The embodiments described below by referring to the accompanying drawings are illustrative and are intended to explain the present disclosure, and should not be construed as limiting the present disclosure.

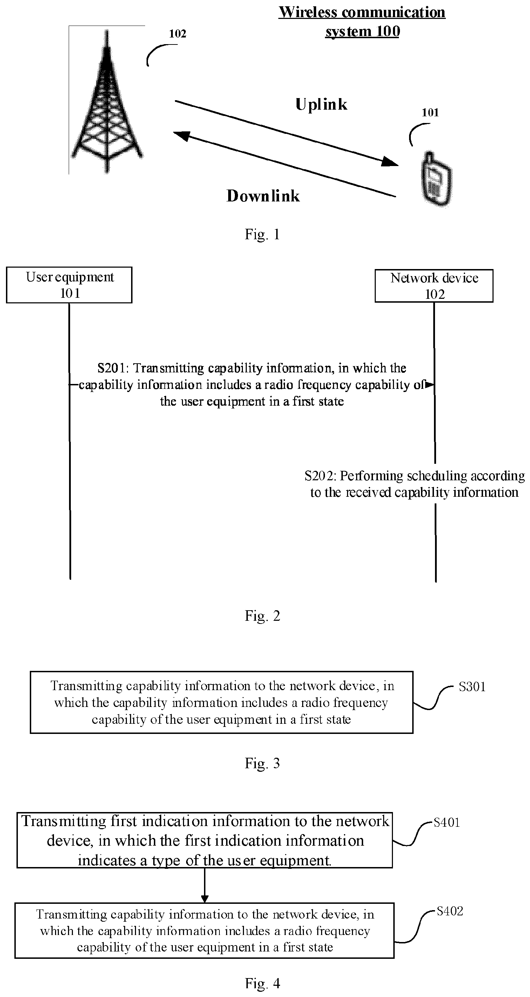

As shown in Fig. 1, a capability information transmission method provided by an embodiment of the present disclosure may be applied to a wireless communication system 100, which may include user equipment 101 and a network device 102. The user equipment 101 is configured to support carrier aggregation and may be connected to a plurality of carrier units of the network device 102, including a main carrier unit and one or more auxiliary carrier units.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-Generation (5G) system, a new radio (NR) communication system or a future evolved public land mobile network (PLMN) system, etc.

The above user equipment 101 may be a terminal, an access terminal, a terminal unit, a terminal station, a mobile station (MS), a remote station, a remote terminal, a mobile terminal, a wireless communication device, a terminal agent or a terminal device, etc. The user equipment 101 may have a wireless transceiving function, and may communicate with one or more network devices of one or more communication systems (for example, in a wireless manner) and accept network services provided by the network devices, which include, but not limited to, the network device 102 shown in the drawings.

The user equipment (UE) 101 may be a cellular phone, a cordless phone, a session initiation protocol (SIP) phone, a wireless local loop (WLL) station, a personal digital assistant (PDA) device, a handheld device with a wireless communication function, a computing device or other processing devices connected to wireless modems, a vehicle-mounted device, a wearable device, a terminal device in a future 5G network or a terminal device in a future evolved PLMN network, etc.

The network device 102 may be an access network device (or an access network site). The access network device refers to a device that provides a network access function, such as a radio access network (RAN) base station and so on. The network device 102 may specifically include a base station (BS), or include a base station and a radio resource management device for controlling the base station. The network device 102 may also include a relay station (a relay device), an access point, a base station in the future 5G network, a base station in the future evolved PLMN network, or a NR base station. The network device 102 may be a wearable device or a vehicle-mounted device. The network device 102 may also be a communication chip with a communication module.

For example, the network device 102 includes, but is not limited to, a next generation node B (gnodeB, gNB) in 5G, an evolved node B (eNB) in an LTE system, a radio network controller (RNC), and a node B (NB) in a WCDMA system, a wireless controller in a CRAN system, a base station controller (BSC), a base transceiver station (BTS) in a GSM system or a CDMA system, a home base station (for example, a home evolved node B or a home node B, HNB), a baseband unit (BBU), a transmitting and receiving point (TRP), a transmitting point (TP) or a mobile switching center.

For the deformable user equipment 101, it may have different states. For example, a foldable screen device includes a folded state and an unfolded state. When the user equipment 101 is in different states, its shape space changes accordingly, and the radio frequency structure of the user equipment 101, such as the antenna design, is directly related to the shape space of the UE. Therefore, when the state of the user equipment 101 changes, its radio frequency capability will also change, for example, the radio frequency capability is stronger in the unfolded state.

In the related art, similar to the ordinary user equipment 101, the deformable user equipment 101 only reports the radio frequency capability in a conventional state (for example, in a storage state or a non-use state), and the network device 102 will not perform adaptive scheduling.

An embodiment of the present disclosure provides a capability information transmission method. Fig. 2 is a flow chart of a capability information transmission method according to an illustrative embodiment. As shown in Fig. 2, the method specifically includes steps S201~S202.

In step S201, the user equipment 101 transmits capability information to the network device 102, and the capability information includes a radio frequency capability of the user equipment 101 in a first state.

In step S202, the network device 102 performs scheduling according to the received capability information.

In some possible embodiments, the user equipment 101 may be the deformable user equipment, that is, user equipment of a first type. For example, the user equipment 101 is a foldable screen device, and the state of the foldable screen device includes a folded state and an unfolded state. For another example, the user equipment 101 is a rollable screen device, and the state of the rollable screen device includes a storage state and an unrolled state.

In some possible embodiments, the capability information transmitted by the user equipment 101 may be additionally transmitted on the basis of the UE capability information in the relevant protocol.

In an example, after the user equipment 101 reports second capability information according to the relevant protocol, it transmits first capability information including the radio frequency capability in the first state. The second capability information may include a radio frequency capability in a second state.

In the embodiment of the present disclosure, different states of the deformable user equipment 101 are generally described as a first state and a second state, in which the first state may be the folded state or the storage state, and the second state may be a usage state or the unfolded state; on the contrary, the first state may also be the usage state or the unfolded state, and the second state may also be the folded state or the storage state.

For convenience of understanding, in the following description, the first state corresponds to an expanded state of the UE, and the second state corresponds to an unexpanded state of the UE, in which the unexpanded state may be the folded state of the foldable screen device or the storage state of the rollable screen device.

In some possible embodiments, when the user equipment 101 reports the capability information according to the relevant protocol, it reports the radio frequency capabilities in the first state and the second state simultaneously in the capability information.

In an example, the user equipment 101 reports the capability information, and the capability information may include the radio frequency capability in the first state, such as the expanded state, and the radio frequency capability in the second state, such as the unexpanded state.

It may be understood that when the user equipment 101 is in the unexpanded state, the shape and size of the user equipment 101 are similar to the shape and size of user equipment of a second type, and the user equipment of the second type is non-deformable user equipment. The shape and size of the user equipment of the second type will not change, and it is considered to be always in a conventional state. For the user equipment of the second type, according to the relevant protocols, it only needs to report the second capability information or only report the radio frequency capability in one state (conventional state).

In some possible embodiments, the radio frequency capability of the user equipment 101 in the first state, such as the expanded state, is stronger than the radio frequency capability of the user equipment 101 in the second state, such as the non-expanded state.

In some possible embodiments, the radio frequency capability includes at least one of:
a numeric count of uplink MIMO layers supported by the user equipment;
a numeric count of downlink MIMO layers supported by the user equipment; and
an uplink power class supported by user equipment.

The numeric count of uplink MIMO layers corresponds to a numeric count of uplink transmission links, and the numeric count of downlink MIMO layers corresponds to a numeric count of downlink reception links. The uplink power class (PC) corresponds to an uplink transmission power.

In an example, when the user equipment 101 is in the expanded state, the numeric count of uplink MIMO layers supported by the user equipment 101 is 2, and the numeric count of downlink MIMO layers supported by the user equipment 101 is 4, that is, supporting 2T/4R, i.e., two uplink transmission links and four downlink reception links. When the user equipment 101 is in the unexpanded state, the numeric count of uplink MIMO layers supported by the user equipment 101 is 2, and the numeric count of downlink MIMO layers supported by the user equipment 101 is 2, that is, supporting 2T/2R, i.e., two uplink transmission links and two downlink reception links.

In some possible embodiments, the network device 102 knows the radio frequency capabilities of the user equipment 101 in different states according to the capability information.

In some possible embodiments, the scheduling of the network device 102 may include determining configuration information according to the capability information, so as to configure resources for the user equipment 101.

In an example, through the configuration information determined by the network device 102, the user equipment 101 is configured with the numeric count of MIMO layers for uplink or downlink transmission, or the numeric count of antenna ports for uplink or downlink transmission.

In an example, through the configuration information determined by the network device 102, the user equipment 101 is configured with a reference signal (RS) resource.

In some possible embodiments, the radio frequency capability of the user equipment 101 in the unexpanded state is stronger, and the network device 102 may make more reasonable configuration in combination with the state of the user equipment 101, so as to make full use of the radio frequency capability of the user equipment 101.

In the embodiment of the present disclosure, the user equipment 101 reports the radio frequency capability in the first state by transmitting the capability information to the network device 102, so that the network device 102 may know the radio frequency capability of the user equipment in the first state, which is beneficial for the network device 102 to make more reasonable scheduling in combination with the state of the user equipment 101, thus exerting the radio frequency performance of the user equipment 101 in the relevant state.

An embodiment of the present disclosure provides a method for transmitting capability information, which is performed by the user equipment 101. Fig. 3 is a flow chart of a method for transmitting capability information according to an illustrative embodiment. As shown in Fig. 3, the method specifically includes step S301.

In step S301, the user equipment 101 transmits capability information to the network device 102, and the capability information includes a radio frequency capability of the user equipment 101 in a first state.

In some possible embodiments, the user equipment 101 may be deformable user equipment.

For example, the user equipment 101 is a foldable screen device, and the state of the foldable screen device includes a folded state and an unfolded state.

For another example, the user equipment 101 is a rollable screen device, and the state of the rollable screen device includes a storage state and an unrolled state.

In some possible embodiments, the first state may refer to an expanded state or an unexpanded state of the UE. For the convenience of understanding, the first state corresponds to the expanded state and the second state corresponds to the unexpanded state, as an example. The unexpanded state may be the folded state of the foldable screen device or the storage state of the rollable screen device.

In some possible embodiments, the radio frequency capabilities of the user equipment 101 in different states are different. For example, when the user equipment 101 is in the expanded state, its radio frequency capability may be stronger than the radio frequency capability in the unexpanded state due to the larger shape and size. The unexpanded state may be the folded state or the storage state.

In some possible embodiments, the radio frequency capability includes at least one of:
a numeric count of uplink MIMO layers supported by the user equipment 101;
a numeric count of downlink MIMO layers supported by the user equipment 101; and
an uplink power class supported by the user equipment 101.

The numeric count of uplink MIMO layers corresponds to a numeric count of uplink transmission links, and the numeric count of downlink MIMO layers corresponds to a numeric count of downlink reception links. The uplink power class (PC) corresponds to an uplink transmission power.

In an example, the capability information reported by the user equipment 101 indicates that the numeric count of uplink MIMO layers supported is 2, which indicates that the user equipment 101 may support up to 2 uplink transmission links.

In an example, the capability information reported by the user equipment 101 indicates that the numeric count of downlink MIMO layers supported is 4, which indicates that the user equipment 101 may support up to 4 downlink reception links.

In an example, the capability information reported by the user equipment 101 indicates that the supported uplink power class is PC1.5, which indicates that the transmission power supported by the user equipment 101 is 29dBm. Alternatively, the capability information reported by the user equipment 101 indicates that the supported uplink power class is PC2, which indicates that the transmission power supported by the user equipment 101 is 26dBm.

In the embodiment of the present disclosure, the user equipment 101 reports the radio frequency capability in the first state by transmitting the capability information to the network device 102, so that the network device 102 may know the radio frequency capability of the user equipment in the first state, which is beneficial for the network device 102 to make more reasonable scheduling in combination with the state of the user equipment 101, thus exerting the radio frequency performance of the user equipment 101 in the relevant state.

An embodiment of the present disclosure provides a method for transmitting capability information, which is performed by the user equipment 101. The method includes specifically step S301-1.

In step S301-1, the user equipment 101 transmits capability information to the network device 102, and the capability information includes a radio frequency capability of the user equipment 101 in a first state and a radio frequency capability of the user equipment 101 in a second state.

In some possible embodiments, the first state may refer to one of an expanded state and an unexpanded state of the UE, and the second state may refer to the other one of the expanded state and the unexpanded state of the UE.

For the sake of understanding, the first state corresponds to the expanded state and the second state corresponds to the unexpanded state, as an example. The unexpanded state may be the folded state of the foldable screen device or the storage state of the rollable screen device. The radio frequency capability in the expanded state is generally stronger than the radio frequency capability in the unexpanded state.

In the embodiment of the present disclosure, the user equipment 101 may transmit the radio frequency capabilities in two states in the same capability information, so that the network device 102 may know the radio frequency capabilities of the user equipment 101 in different states after receiving the capability information, which is beneficial to making reasonable configuration according to the states.

An embodiment of the present disclosure provides a method for transmitting capability information, which is performed by the user equipment 101. The method specifically includes step S301-2.

In step S301-2, the user equipment 101 transmits first capability information and second capability information to the network device 102. The first capability information includes a radio frequency capability of the user equipment 101 in a first state, and the second capability information includes a radio frequency capability of the user equipment 101 in a second state.

In some possible embodiments, the first state may refer to one of an expanded state and an unexpanded state of the UE, and the second state may refer to the other one of the expanded state and the unexpanded state of the UE.

For the sake of understanding, the first state corresponds to the expanded state and the second state corresponds to the unexpanded state, as an example. The unexpanded state may be the folded state of the foldable screen device or the storage state of the rollable screen device. The radio frequency capability in the expanded state is generally stronger than the radio frequency capability in the unexpanded state.

In the embodiment of the present disclosure, the user equipment 101 transmits two sets of capability information, that is, the capability information in two states, respectively, so that the network device 102 may know the radio frequency capabilities of the user equipment 101 in different states according to the two sets of capability information.

An embodiment of the present disclosure provides a method for transmitting capability information, which is performed by the user equipment 101. The method specifically includes step S301-3.

In step S301-3, in a case that a type of the user equipment is a first type, the user equipment 101 transmits capability information to the network device 102, and the capability information includes a radio frequency capability of the user equipment 101 in a first state.

A state of the user equipment 101 of the first type includes a first state and a second state.

In some possible embodiments, the first state may refer to one of an expanded state and an unexpanded state of the UE, and the second state may refer to the other one of the expanded state and the unexpanded state of the UE. For the sake of understanding, the first state corresponds to the expanded state and the second state corresponds to the unexpanded state, as an example.

In some possible embodiments, the user equipment 101 of the first type may be the foldable screen device or the rollable screen device. The unexpanded state may be the folded state of the foldable screen device or the storage state of the rollable screen device.

In some possible embodiments, the user equipment 101 of the first type may include the radio frequency capability in the expanded and the radio frequency capability in the unexpanded in the same capability information.

In some possible embodiments, the user equipment 101 of the first type may transmit two sets of capability information respectively, so as to report the radio frequency capability in the expanded state and the radio frequency capability in the unexpanded state, respectively.

In some possible embodiments, the radio frequency capability includes at least one of:
a numeric count of uplink MIMO layers supported by the user equipment 101;
a numeric count of downlink MIMO layers supported by the user equipment 101; and
an uplink power class supported by the user equipment 101.

The numeric count of uplink MIMO layers corresponds to a numeric count of uplink transmission links, and the numeric count of downlink MIMO layers corresponds to a numeric count of downlink reception links. The uplink power class (PC) corresponds to an uplink transmission power.

In the embodiment of the present disclosure, the user equipment 101 with different states may report the radio frequency capabilities in different states to the network device 102, so that the network device 102 may determine the radio frequency capability of the user equipment 101 in the corresponding state.

An embodiment of the present disclosure provides a method for transmitting capability information, which is performed by the user equipment 101. Fig. 4 is a flow chart of a method for transmitting capability information according to an illustrative embodiment. As shown in Fig. 4, the method specifically includes steps S401~S402.

In step S401, the user equipment 101 transmits first indication information to the network device 102, and the first indication information indicates a type of the user equipment.

In step S402, the user equipment 101 transmits capability information to the network device 102, and the capability information includes a radio frequency capability of the user equipment 101 in a first state.

The execution sequence of steps S401 to S402 is only for illustration, and in other examples, step S402 may be executed first, or step S401 and step S402 may be executed at the same time.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the first indication information may indicate an identifier of a user equipment type (UE type). For example, the first indication information includes a bit for indicating the user equipment type.

In an example, the first indication information indicates the type of the user equipment by 1 bit. For example, when the 1-bit value is 1, it indicates that the type of the user equipment is a first type; and when the 1-bit value is 0, it indicates that the type of the user equipment is a second type.

The user equipment of the first type is deformable user equipment 101, such as a foldable screen device or a rollable screen device. The user equipment of the second type is undeformable user equipment 101, such as a conventional intelligent terminal.

In some possible embodiments, the capability information transmitted by the user equipment of the first type includes the radio frequency capability in the first state, such as the expanded state, while the user equipment of the second type only transmits the radio frequency capability in the conventional state.

In some possible embodiments, the network device 102 may determine the type of the user equipment according to the received first indication information, and may know whether the capability information transmitted by the user equipment 101 includes the radio frequency capabilities in two states before receiving the capability information.

In an example, when the first indication information indicates that the type of the user equipment is the first type, the capability information of the user equipment 101 includes the radio frequency capabilities in two states.

In this example, the network device 102 may perform adaptive processing on the received capability information in combination with the first indication information. For example, the network device 102 demodulates different bits of the capability information to obtain the radio frequency capabilities in two states in the same capability information, respectively. Alternatively, the network device 102 demodulates the first capability information and the second capability information, respectively, to obtain the radio frequency capabilities in two states.

In an example, when the first indication information indicates that the type of the user equipment is the second type, the capability information of the user equipment 101 only contains the radio frequency capability in the conventional state.

In this example, the network device 102 may perform adaptive processing on the received capability information in combination with the first indication information. For example, the network device 102 only demodulates bits in the capability information indicating the radio frequency capability in the conventional state.

In some possible embodiments, when the user equipment 101 does not report the first indication information, the network device 102 may default the type of the user equipment 101 to the second type.

In the embodiment of the present disclosure, the user equipment 101 transmits the first indication information before transmitting the capability information, so as to indicate to the network device 102 whether the capability information contains radio frequency capabilities in different states, so that the network device 102 may perform adaptive processing on the capability information.

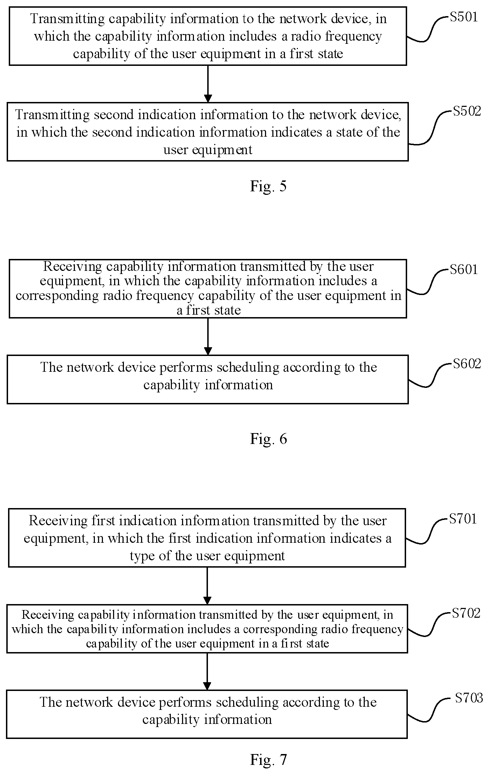

An embodiment of the present disclosure provides a method for transmitting capability information, which is performed by the user equipment 101. Fig. 5 is a flow chart of a method for transmitting capability information according to an illustrative embodiment. As shown in Fig. 5, the method specifically includes steps S501~S502.

In step S501, the user equipment 101 transmits capability information to the network device 102, and the capability information includes a radio frequency capability of the user equipment 101 in a first state.

In step S502, the user equipment 101 transmits second indication information to the network device 102, and the second indication information indicates a state of the user equipment 101.

The execution sequence of steps S501 to S502 is only for illustration, and in other examples, step S502 may be executed first, or step S501 and step S502 may be executed at the same time.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the user equipment 101 may detect whether its current state is the expanded state or the unexpanded state through an internal sensing device. The sensing device includes, but is not limited to, a Hall sensor, a gyroscope, etc.

In some possible embodiments, the user equipment 101 may be a foldable screen device or a rollable screen device.

In some possible embodiments, the second indication information includes a bit for indicating the state of the user equipment 101.

In an example, the second indication information indicates the state of the user equipment by 1 bit.

For example, when the 1-bit value is 1, it indicates that the user equipment is in the expanded state; and when the 1-bit value is 0, it indicates that the user equipment is in the unexpanded state. The unexpanded state may be the folded state of the foldable screen device or the storage state of the rollable screen device.

In some possible embodiments, when the user equipment 101 does not report the second indication information, the network device 102 may default the state of the user equipment 101 to the unexpanded state.

In the embodiment of the present disclosure, the user equipment 101 reports the capability information and the second indication information to the network device 102, so that the network device 102 may know the radio frequency capabilities of the user equipment 101 in different states, and may determine the radio frequency capability of the user equipment 101 in combination with the current state of the user equipment 101, so as to make reasonable scheduling in combination with the state of the user equipment 101.

An embodiment of the present disclosure provides a method for transmitting capability information, which is performed by the user equipment 101. The method specifically includes steps S501 to S502'.

In step S501, the user equipment 101 transmits capability information to the network device 102, and the capability information includes a radio frequency capability of the user equipment 101 in a first state.

In step S502', in a case that a state of the user equipment 101 changes, the user equipment 101 transmits second indication information to the network device 102, and the second indication information indicates the state of the user equipment 101.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, when the state of the user equipment 101 changes, the radio frequency capability supported by the user equipment 101 will also change. Therefore, when the state of the user equipment 101 changes, the user equipment 101 reports the second indication information, so that the network device 102 may re-determine the radio frequency capability of the user equipment 101 in the current state, thus adjusting the resource configuration in time.

In an example:
the user equipment 101 is in the folded state before time t1, and the network device 102 may determine the radio frequency capability supported by the user equipment 101 in the folded state in combination with the capability information and the first piece of second indication information reported by the user equipment 101 before the time t1, and perform resource configuration based on the radio frequency capability in the folded state; and
when the user equipment 101 changes to the expanded state after the time t1, the user equipment 101 reports the second piece of second indication information. In combination with the second piece of second indication information, the network device 102 determines that the current state of the user equipment 101 is the expanded state, and determines the radio frequency capability supported by the user equipment 101 in the expanded state in combination with the capability information, and performs resource configuration again based on the radio frequency capability in the expanded state.

In this example, the radio frequency capability in the unfolded state is greater than the radio frequency capability in the folded state. In combination with the state change of the user equipment 101, the network device 102 may make adaptive configuration according to the stronger radio frequency capability after the state of the user equipment 101 changes, so as to make full use of the communication performance of the UE in the expanded state.

In the embodiment of the present disclosure, the user equipment 101 may dynamically report the second indication information in combination with its own state change. Therefore, the network device 102 may know the state of the user equipment 101 in combination with the second indication information, and know the radio frequency capability corresponding to the changed state again, so as to adjust the resource configuration in time in combination with the change of the radio frequency capability.

An embodiment of the present disclosure provides a method for transmitting capability information, which is performed by the user equipment 101. The method specifically includes steps S501~S502".

In step S501, the user equipment 101 transmits capability information to the network device 102, and the capability information includes a radio frequency capability of the user equipment 101 in a first state.

In step S502", in a case that an uplink channel environment and/or an uplink traffic volume do not meet conditions, the user equipment 101 transmits second indication information to the network device 102, and the second indication information indicates a state of the user equipment 101.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the user equipment 101 may not report the second indication information when both the uplink channel environment and the uplink traffic volume meet the corresponding conditions. At this time, the current radio frequency capability of the user equipment 101 may handle the corresponding service, and the network device 102 does not need to configure the user equipment 101 to switch the radio frequency capability.

In some possible embodiments, when a quality parameter corresponding to the uplink channel environment is greater than or equal to a first threshold, it is considered that the uplink channel environment meets the condition. When the quality parameter corresponding to the uplink channel environment is less than the first threshold, it is considered that the uplink channel environment does not meet the condition.

The quality parameter may be a reference signal received power (RSRP), a reference signal received quality (RSRQ) or a signal to interference plus noise ratio (SINR).

In an example, the first threshold is a value agreed by a protocol or a value configured by the network device 102.

In some possible embodiments, when the uplink traffic volume is less than a second threshold, it is considered that the uplink traffic volume meets the condition. When the uplink traffic volume is greater than or equal to the second threshold, it is considered that the uplink traffic volume does not meet the condition. The uplink traffic volume may be represented by the amount of data packets to be transmitted by the user equipment 101.

In an example, the second threshold is a value preset in the user equipment 101 or a value agreed by a protocol.

In some possible embodiments, when at least one of the uplink channel environment and the uplink traffic volume does not meet the condition, the network device 102 needs to configure the user equipment 101 to switch the radio frequency capability.

In an example:
when the user equipment 101 is in the folded state, the network device 102 performs scheduling according to the radio frequency capability in the folded state; and
in a scenario where the user equipment 101 changes to the expanded state, in a case that the uplink channel environment and the uplink traffic volume both meet the corresponding conditions, the user equipment 101 may not report the second indication information, and at this time, the network device 102 still performs scheduling according to the radio frequency capability in the folded state; and in a case that the uplink channel environment and/or the uplink traffic volume do not meet the conditions, the user equipment 101 reports the second indication information, and the network device 102 will perform scheduling according to the radio frequency capability in the expanded state.

In the embodiment of the present disclosure, the user equipment 101 may judge the channel environment and traffic volume before transmitting the second indication information, and then report the second indication information at an appropriate time, so as to reduce the number of scheduling adjustments by the network device 102.

An embodiment of the present disclosure provides a method for transmitting capability information, which is performed by the user equipment 101. The method specifically includes step S501'.

In step S501', the user equipment 101 transmits second indication information to the network device 102, and transmits capability information to the network device 102 when transmitting the second indication information. The second indication information indicates a state of the user equipment 101, and the capability information includes a radio frequency capability of the user equipment 101 in a first state.

In some possible embodiments, the first state may refer to one of an expanded state and an unexpanded state of the UE. For example, the first state corresponds to the expanded state.

The embodiment of the present disclosure is applicable to a scenario where the user equipment 101 transmits two sets of capability information, respectively. In the embodiment of the present disclosure, the capability information in step S501' corresponds to the first capability information. The user equipment 101 transmits the second capability information according to the existing protocol, and transmits the first capability information simultaneously when transmitting the second indication information.

An embodiment of the present disclosure provides a method for receiving capability information, which is performed by the network device 102. Fig. 6 is a flow chart of a method for receiving capability information according to an illustrative embodiment. As shown in Fig. 6, the method specifically includes steps S601~S602.

In step S601, the network device 102 receives capability information transmitted by the user equipment 101, and the capability information includes a corresponding radio frequency capability of the user equipment 101 in a first state.

In step S602, the network device 102 performs scheduling according to the capability information.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the capability information received by the network device 102 may include both a radio frequency capability of the user equipment 101 in the expanded state and a radio frequency capability of the user equipment 101 in the unexpanded state. The unexpanded state may be a folded state or a storage state.

In some possible embodiments, the radio frequency capability in the expanded state is stronger than the radio frequency capability in the unexpanded state.

In some possible embodiments, the network device 102 may receive two sets of capability information transmitted by the user equipment 101, respectively.

In an example, the network device 102 receives first capability information and second capability information transmitted by the user equipment 101. The first capability information includes the radio frequency capability of the user equipment in the expanded state, and the second capability information includes the radio frequency capability of the user equipment in the unexpanded state.

In some possible embodiments, the radio frequency capability includes at least one of:
a numeric count of uplink MIMO layers supported by the user equipment;
a numeric count of downlink MIMO layers supported by the user equipment; and
an uplink power class supported by user equipment.

The numeric count of uplink MIMO layers corresponds to a numeric count of uplink transmission links, and the numeric count of downlink MIMO layers corresponds to a numeric count of downlink reception links. The uplink power class (PC) corresponds to an uplink transmission power.

In some possible embodiments, the scheduling by the network device 102 may include determining configuration information according to the capability information, so as to make resource configuration for the user equipment 101.

In an example, through the configuration information determined by the network device 102, the user equipment 101 is configured with the numeric count of MIMO layers for uplink or downlink transmission, or the numeric count of antenna ports for uplink or downlink transmission.

In an example, through the configuration information determined by the network device 102, the user equipment 101 is configured with a reference signal (RS) resource.

In the embodiment of the present disclosure, the network device 102 knows the radio frequency capability of the user equipment 101 in the first state through the received capability information, which is beneficial for the network device 102 to make more reasonable scheduling in combination with the state of the user equipment 101, thus exerting the radio frequency performance of the user equipment 101 in the relevant state.

An embodiment of the present disclosure provides a method for receiving capability information, which is performed by the network device 102. Fig. 7 is a flow chart of a method for receiving capability information according to an illustrative embodiment. As shown in Fig. 7, the method specifically includes steps S701~S703.

In step S701, the network device 102 receives first indication information transmitted by the user equipment 101, and the first indication information indicates a type of the user equipment.

In step S702, the network device 102 receives capability information transmitted by the user equipment 101, and the capability information includes a corresponding radio frequency capability of the user equipment 101 in a first state.

In step S703, the network device 102 performs scheduling according to the capability information.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the first indication information may indicate an identifier of a user equipment type (UE type). For example, the first indication information includes a bit for indicating the user equipment type.

In some possible embodiments, the user equipment of a first type is deformable user equipment 101, such as a foldable screen device or a rollable screen device. The user equipment of a second type is undeformable user equipment 101, such as a conventional intelligent terminal.

In some possible embodiments, the network device 102 may know in advance whether the capability information contains the radio frequency capabilities in two states according to the received first indication information.

In an example, when the first indication information indicates that the type of the user equipment is the first type, the network device 102 may determine that the same capability information contains the radio frequency capabilities in two states, or determine that the user equipment 101 will transmit first capability information and second capability information.

In this example, the network device 102 may demodulate different bits of the same capability information to obtain the radio frequency capabilities in two states in the same capability information, respectively. Alternatively, the network device 102 demodulates the first capability information and the second capability information, respectively, to obtain the radio frequency capabilities in two states.

In an example, when the first indication information indicates that the type of the user equipment is the second type, the network device 102 may determine that the same capability information only contains the radio frequency capability in the conventional state. In this example, the network device 102 only demodulates bits in the capability information indicating the radio frequency capability in the conventional state.

In some possible embodiments, when the network device 102 does not receive the first indication information, the network device 102 may default the type of the user equipment 101 to the second type.

In the embodiment of the present disclosure, the network device 102 may know whether the capability information contains the radio frequency capabilities in two states in combination with the first indication information, so as to perform adaptive processing on the capability information.

An embodiment of the present disclosure provides a method for receiving capability information, which is performed by the network device 102. The method specifically includes steps S701, S702' and S703.

In step S701, the network device 102 receives first indication information transmitted by the user equipment 101, and the first indication information indicates a type of the user equipment.

In step S702', the network device 102 receives capability information in a case that the type of the user equipment 101 is a first type, according to the first indication information, and the capability information includes a corresponding radio frequency capability of the user equipment 101 in a first state.

In step S703, the network device 102 performs scheduling according to the capability information.

In some possible embodiments, the first state may refer to one of an expanded state and an unexpanded state of the UE. For example, the first state corresponds to the expanded state.

In some possible embodiments, the capability information in step S702' is capability information containing a radio frequency capability in the expanded state. For example, in a scenario where the user equipment 101 transmits the first capability information and the second capability information respectively, the capability information in step S702' is the first capability information.

In the embodiment of the present disclosure, the user equipment 101 of the first type will transmit its own radio frequency capability in the expanded state, and the network device 102 may perform reasonable scheduling at an appropriate time in combination with the radio frequency capability of the user equipment 101 in the expanded state, so as to make full use of the strong radio frequency performance in the expanded state.

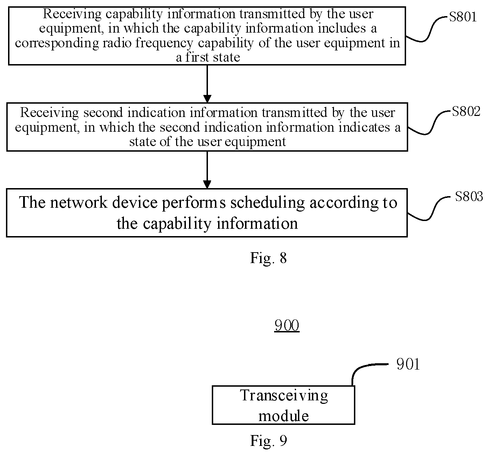

An embodiment of the present disclosure provides a method for receiving capability information, which is performed by the network device 102. Fig. 8 is a flow chart of a method for receiving capability information according to an illustrative embodiment. As shown in Fig. 8, the method specifically includes steps S801~S803.

In step S801, the network device 102 receives capability information transmitted by the user equipment 101, and the capability information includes a corresponding radio frequency capability of the user equipment 101 in a first state.

In step S802, the network device 102 receives second indication information transmitted by the user equipment 101, and the second indication information indicates a state of the user equipment.

In step S803, the network device 102 performs scheduling according to the capability information.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, in a scenario where the user equipment 101 transmits the first capability information and the second capability information respectively, the network device 102 may receive the second capability information first, and then receive the second indication information and the first capability information simultaneously transmitted by the user equipment 101.

In some possible embodiments, the network device 102 may determine the state of the user equipment 101 according to a value of a bit in the second indication information.

In an example, the second indication information indicates the state of the user equipment by 1 bit. When the 1-bit value is 1, it indicates that the state of the user equipment is the expanded state; and when the 1-bit value is 0, it indicates that the state of the user equipment is the unexpanded state. The unexpanded state may be the folded state of the foldable screen device or the storage state of the rollable screen device.

In some possible embodiments, when the user equipment 101 does not report the second indication information, the network device 102 may default the state of the user equipment 101 to the unexpanded state.

In an example, the user equipment 101 may not report the second indication information when both an uplink channel environment and an uplink traffic volume meet corresponding conditions.

In some possible embodiments, the network device 102 determines the current radio frequency capability of the user equipment 101 in this state according to the state indicated by the second indication information, and performs scheduling in combination with this radio frequency capability.

In the embodiment of the present disclosure, the network device 102 may know the state of the user equipment 101 through the second indication information transmitted by the user equipment 101, so as to facilitate reasonable scheduling in combination with the state.

An embodiment of the present disclosure provides a method for receiving capability information, which is performed by the network device 102. The method specifically includes steps S801~S803".

In step S801, the network device 102 receives capability information transmitted by the user equipment 101, and the capability information includes a corresponding radio frequency capability of the user equipment 101 in a first state.

In step S802, the network device 102 receives second indication information transmitted by the user equipment 101, and the second indication information indicates a state of the user equipment.

In step S803', in a case of receiving the second indication information, the network device 102 determines a radio frequency capability corresponding to the state of the user equipment according to the second indication information and the capability information.

In step S803", the network device 102 determines configuration information according to the radio frequency capability corresponding to the state of the user equipment 101.

In some possible embodiments, the first state may refer to one of an expanded state and an unexpanded state of the UE, and a second state may refer to the other one of the expanded state and the unexpanded state of the UE. For the convenience of understanding, the first state corresponds to the expanded state and the second state corresponds to the unexpanded state, as an example.

In some possible embodiments, the network device 102 determines the current radio frequency capability of the user equipment 101 in this state according to the state indicated by the second indication information, and performs scheduling in combination with this radio frequency capability.

In some possible embodiments, through the configuration information determined by the network device 102, the user equipment 101 is configured with a numeric count of MIMO layers for uplink or downlink transmission, or a numeric count of antenna ports for uplink or downlink transmission.

In some possible embodiments, through the configuration information determined by the network device 102, the user equipment 101 is configured with a reference signal (RS) resource.

In an example:
the second indication information indicates the state of the user equipment by 1 bit;
when the 1-bit value is 1, it indicates that the state of the user equipment is the expanded state; the network device 102 performs scheduling according to the radio frequency capability of the user equipment 101 in the expanded state; for example, the network device 102 configures the radio frequency capability of the user equipment 101 as the radio frequency capability in the expanded state, and determines the configuration information of the reference signal according to the radio frequency capability in the expanded state; and
when the 1-bit value is 0, it indicates that the user equipment is in the unexpanded state; the network device 102 performs scheduling according to the radio frequency capability of the user equipment 101 in the unexpanded state; for example, the network device 102 configures the radio frequency capability of the user equipment 101 as the radio frequency capability in the unexpanded state, and determines the configuration information of the reference signal according to the radio frequency capability in the unexpanded state.

The radio frequency capability of the user equipment in the expanded state is stronger than the radio frequency capability of the user equipment in the unexpanded state.

In the embodiment of the present disclosure, the network device 102 may make adaptive configuration in combination with the state change of the user equipment 101 and the radio frequency capability corresponding to the state of the user equipment 101, so that the radio frequency capability in the expanded state may be fully utilized.

To facilitate understanding of the embodiments of the present disclosure, two examples are listed below.

### Example 1

The capability information reported by the user equipment 101 includes: in the expanded state, the numeric count of uplink MIMO layers supported is 2, and the numeric count of downlink MIMO layers supported is 4, that is, supporting 2T/4R; in the unexpanded state, the numeric count of uplink MIMO layers supported is 2, and the numeric count of downlink MIMO layers supported is 2, that is, supporting 2T/2R.

In the second indication information reported by the user equipment 101, the bit value for indicating the state is 1 or 0.

When the bit value for indicating the state in the second indication information is 1, the network device 102 may know that the user equipment 101 is currently in the expanded state according to the received second indication information. According to the capability information, the network device 102 may know that the corresponding radio frequency capability in the expanded state is 2T/4R. Then, the network device 102 configures the user equipment 101 to adopt the 2T/4R radio frequency capability, and performs resource configuration according to 2T/4R, such as resource configuration of reference signals.

When the bit value for indicating the state in the second indication information is 0, the network device 102 may know that the user equipment 101 is currently in the unexpanded state according to the received second indication information. According to the capability information, the network device 102 may know that the corresponding radio frequency capability in the unexpanded state is 2T/2R. Then, the network device 102 configures the user equipment 101 to adopt the 2T/2R radio frequency capability, and performs resource configuration according to 2T/2R, such as resource configuration of reference signals.

### Example 2

The capability information reported by the user equipment 101 includes that the supported uplink power class in the expanded state is PC1.5 and the supported uplink power class in the unexpanded state is PC2.

In the second indication information reported by the user equipment 101, the bit value for indicating the state is 1 or 0.

When the bit value for indicating the state in the second indication information is 1, the network device 102 may know that the user equipment 101 is currently in the expanded state according to the received second indication information. According to the capability information, the network device 102 may know that the corresponding radio frequency capability in the expanded state is PC1.5, that is, supporting a transmission power of 29dBm. Then, the network device 102 configures the user equipment 101 to adopt the radio frequency capability of PC1.5, and performs resource configuration according to PC1.5, such as resource configuration of reference signals.

When the bit value for indicating the state in the second indication information is 0, the network device 102 may know that the user equipment 101 is currently in the unexpanded state according to the received second indication information. According to the capability information, the network device 102 may know that the corresponding radio frequency capability in the unexpanded state is PC2, that is, supporting a transmission power of 26dBm. Then, the network device 102 configures the user equipment 101 to adopt the radio frequency capability of PC2, and performs resource configuration according to PC2, such as resource configuration of reference signals.

Based on the same concept as the above method embodiments, embodiments of the present disclosure also provide a device for transmitting capability information, which may have the functions of the user equipment 101 in the above method embodiments, and may be used to execute the steps performed by the user equipment 101 provided by the above method embodiments. These functions may be realized by hardware or software, or by hardware executing corresponding software. The hardware or software includes one or more modules corresponding to the above functions.

In a possible implementation, a communication device 900 shown in Fig. 9 may be used as the user equipment 101 involved in the above method embodiments, and perform the steps performed by the user equipment 101 in the above method embodiments. As shown in Fig. 9, the communication device 900 may include a transceiving module 901, the transceiving module 901 may be used to support the communication of the communication device, and the transceiving module 901 may have a wireless communication function, for example, being able to communicate wirelessly with other communication devices through a radio air interface.

When executing the steps implemented by the user equipment 101, the transceiving module 901 is configured to transmit capability information to the network device, and the capability information includes a radio frequency capability of the user equipment in a first state.

In some possible embodiments, the capability information further includes a radio frequency capability of the user equipment in a second state.

In some possible embodiments, the transceiving module 901 is further configured to transmit first capability information and second capability information to the network device, the first capability information includes the radio frequency capability of the user equipment in the first state, and the second capability information includes the radio frequency capability of the user equipment in the second state.

In some possible embodiments, the transceiving module 901 is further configured to transmit the capability information to the network device in a case that a type of the user equipment is a first type.

A state of the user equipment of the first type includes a first state and a second state.

In some possible embodiments, the transceiving module 901 is further configured to transmit first indication information to the network device, and the first indication information indicates the type of the user equipment.

In some possible embodiments, the transceiving module 901 is further configured to transmit second indication information to the network device, and the second indication information indicates a state of the user equipment.

In some possible embodiments, the transceiving module 901 is further configured to transmit the second indication information to the network device in a case that the state of the user equipment changes.

In some possible embodiments, the transceiving module 901 is further configured to transmit the second indication information to the network device in a case that an uplink channel environment and/or an uplink traffic volume do not meet conditions.

In some possible embodiments, the transceiving module 901 is further configured to transmit the capability information to the network device in a case of transmitting the second indication information.

In some possible embodiments, the radio frequency capability includes at least one of:
a numeric count of uplink MIMO layers supported by the user equipment;
a numeric count of downlink MIMO layers supported by the user equipment; and
an uplink power class supported by the user equipment.

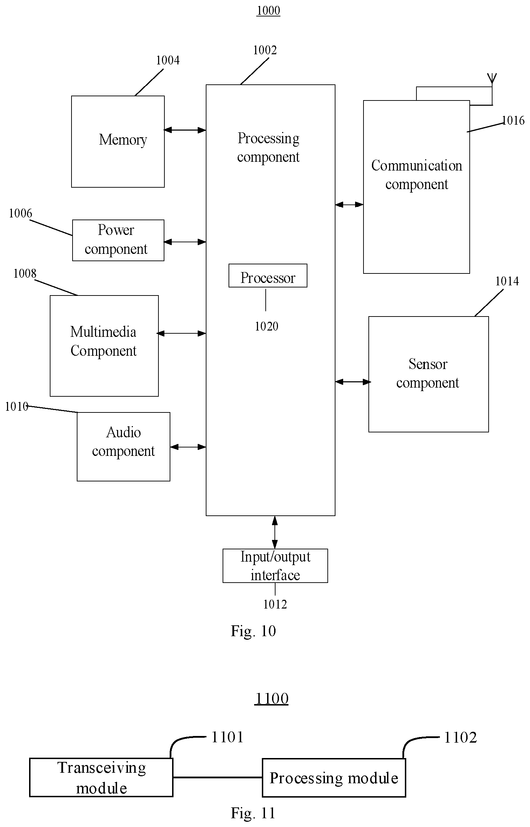

When the communication device is the user equipment 101, its structure may also be as shown in Fig. 10. Referring to Fig. 10, a device 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 generally controls the overall operation of the device 1000, such as operations associated with display, telephone call, data communication, camera operations and recording operations. The processing component 1002 may include one or more processors 1020 to execute instructions to complete all or part of the steps of the methods described above. In addition, the processing component 1002 may include one or more modules to facilitate interaction between the processing component 1002 and other components. For example, the processing component 1002 may include a multimedia module to facilitate interaction between the multimedia component 1008 and the processing component 1002.

The memory 1004 is configured to store various types of data to support operations at the device 1000. Examples of these data include instructions for any application or method operating on the device 1000, contact data, phone book data, messages, pictures, videos, and the like. The memory 1004 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 1006 provides power to various components of the device 1000. The power component 1006 may include a power management system, one or more power supplies, and other components associated with generating, managing and distributing power for the device 1000.

The multimedia component 1008 includes a screen that provides an output interface between the device 1000 and a user. In some embodiments, the screen may include a liquid crystal display (LCD) and a touch panel (TP). If the screen includes a touch panel, the screen may be implemented as the touch screen to receive an input signal from the user. The touch panel includes one or more touch sensors to sense touch, swipe and gestures on the touch panel. The touch sensor may not only sense the boundary of the touch or swipe action, but also detect the duration and pressure related to the touch or swipe operation. In some embodiments, the multimedia component 1008 includes a front camera and/or a rear camera. When the device 1000 is in an operation mode, such as a shooting mode or a video mode, the front camera and/or the rear camera may receive external multimedia data. Each of the front camera and the rear camera may be a fixed optical lens system or have a focal length and an optical zoom capability.

The audio component 1010 is configured to output and/or input audio signals. For example, the audio component 1010 includes a microphone (MIC) configured to receive external audio signals when the device 1000 is in operation modes, such as a call mode, a recording mode and a voice recognition mode. The received audio signal may be further stored in the memory 1004 or transmitted via the communication component 1016. In some embodiments, the audio component 1010 further includes a speaker for outputting audio signals.

The I/O interface 1012 provides an interface between the processing component 1002 and peripheral interface modules, which may be keyboards, click wheels, buttons, etc. These buttons may include, but are not limited to, a home button, a volume button, a start button and a lock button.

The sensor assembly 1014 includes one or more sensors for providing various aspects of state evaluation for the device 1000. For example, the sensor component 1014 may detect the on/off state of the device 1000, the relative positioning of components, such as the display and keypad of the device 1000, the position change of the device 1000 or a component of the device 1000, the presence or absence of user contact with the device 1000, the orientation or acceleration/deceleration of the device 1000 and the temperature change of the device 1000. The sensor assembly 1014 may include a proximity sensor configured to detect the presence of a nearby object without any physical contact. The sensor assembly 1014 may also include an optical sensor, such as a CMOS or CCD image sensor, for use in imaging applications. In some embodiments, the sensor assembly 1014 may further include an acceleration sensor, a gyro sensor, a magnetic sensor, a pressure sensor or a temperature sensor.

The communication component 1016 is configured to facilitate wired or wireless communication between the device 1000 and other devices. The device 1000 may access a wireless network based on communication standards, such as WiFi, 2G or 3G, or a combination thereof. In an illustrative embodiment, the communication component 1016 receives a broadcast signal or broadcast related information from an external broadcast management system via a broadcast channel. In an illustrative embodiment, the communication component 1016 further includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an illustrative embodiment, the device 1000 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic components, for performing the above methods.

In an illustrative embodiment, there is also provided a non-transitory computer-readable storage medium including instructions, such as the memory 1004 including instructions, and the instructions may be executed by the processor 1020 of the device 1000 to complete the above method. For example, the non-transitory computer-readable storage medium may be a ROM, a random access memory (RAM), a CD-ROM, a magnetic tape, a floppy disk and an optical data storage device.

Based on the same concept as the above method embodiments, embodiments of the present disclosure also provide a device for receiving capability information, which may have the functions of the network device 102 in the above method embodiments, and may be used to execute the steps performed by the network device 102 provided by the above method embodiments. These functions may be realized by hardware or software, or by hardware executing corresponding software. The hardware or software includes one or more modules corresponding to the above functions.

In a possible implementation, a device 1100 shown in Fig. 11 may be used as the network device 102 involved in the above method embodiment, and perform the steps performed by the network device 102 in the above method embodiments. As shown in Fig. 11, the device 1100 may include a transceiving module 1101 and a processing module 1102 coupled to each other, the transceiving module 1101 may be used to support communication of a communication device, and the transceiving module 1101 may have a wireless communication function, for example, being able to communicate wirelessly with other communication devices through a radio air interface. The processing module 1102 may be used for the communication device to perform processing operations, such as generating information/messages to be transmitted, or processing received signals to obtain information/messages.

When executing the steps implemented by the network device 102, the transceiving module 1101 is configured to receive capability information transmitted by the user equipment, and the capability information includes a corresponding radio frequency capability of the user equipment in a first state.

The processing module 1102 is configured to perform scheduling according to the capability information.

In some possible embodiments, the transceiving module 1101 is further configured to receive first capability information and second capability information transmitted by the user equipment. The first capability information includes the radio frequency capability of the user equipment in the first state, and the second capability information includes a radio frequency capability of the user equipment in a second state.

In some possible embodiments, the transceiving module 1101 is further configured to receive first indication information transmitted by the user equipment, and the first indication information indicates a type of the user equipment.

In some possible embodiments, the transceiving module 1101 is further configured to receive the capability information in a case that the type of the user equipment is a first type, according to the first indication information.

In some possible embodiments, the transceiving module 1101 is further configured to receive second indication information transmitted by the user equipment, and the second indication information indicates a state of the user equipment.

In some possible embodiments, in a case of receiving the second indication information, the processing module 1102 is further configured to determine a radio frequency capability corresponding to the state of the user equipment according to the second indication information and the capability information; determining the configuration information according to the radio frequency capability corresponding to the state of the user equipment.

In some possible embodiments, the radio frequency capability includes at least one of:
a numeric count of uplink MIMO layers supported by the user equipment;
a numeric count of downlink MIMO layers supported by the user equipment; and
an uplink power class supported by user equipment.

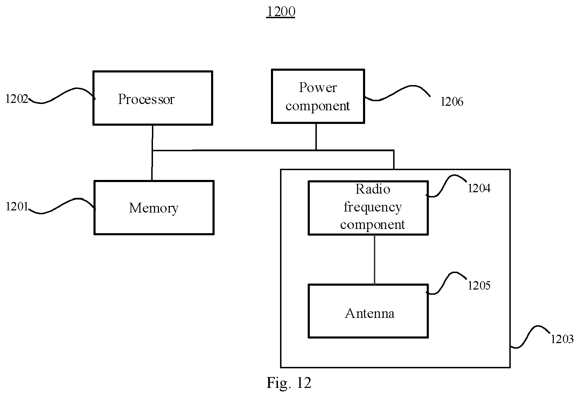

When the communication device is the network device 102, its structure may also be as shown in Fig. 12. The structure of the communication device is explained by taking a base station as an example. As shown in Fig. 12, a communication device 1200 includes a memory 1201, a processor 1202, a transceiving component 1203, and a power component 1206. The memory 1201 is coupled to the processor 1202 and may be used to store programs and data necessary for the communication device 1200 to realize various functions. The processor 1202 is configured to support the communication device 1200 to perform the corresponding functions in the above methods, and the functions may be realized by calling the program stored in the memory 1201. The transceiving component 1203 may be a wireless transceiver, which may be used to support the communication device 1200 to receive signaling and/or data and transmit signaling and/or data through a radio air interface. The transceiving module 1203 may also be called a transceiving unit or a communication unit. The transceiving module 1203 may include a radio frequency module 1204 and one or more antennas 1205, the radio frequency module 1204 may be a remote radio unit (RRU), which may be used for the transmission of radio frequency signals and the conversion between radio frequency signals and baseband signals, and the one or more antennas 1205 may be used for the radiation and reception of radio frequency signals.

When the communication device 1200 needs to transmit data, the processor 1202 may perform baseband processing on the data to be transmitted, and then output the baseband signal to the radio frequency unit, and the radio frequency unit performs radio frequency processing on the baseband signal and then transmits the radio frequency signal in the form of electromagnetic waves through the antenna. When data is transmitted to the communication device 1200, the radio frequency unit receives the radio frequency signal through the antenna, converts the radio frequency signal into the baseband signal, and outputs the baseband signal to the processor 1202, and the processor 1202 converts the baseband signal into data and processes the data.

Those skilled in the art will easily think of other implementations of the embodiments of the present disclosure after considering the specification and practicing the invention disclosed herein. The present disclosure is intended to cover any variations, uses or adaptations of the embodiments of the present disclosure, which follow the general principles of the embodiments of the present disclosure and include the common sense or common technical means in the related art that are not disclosed in the present disclosure. The specification and examples are to be regarded as illustrative only, with the true scope and spirit of the embodiments of the present disclosure being indicated by the following claims.

It should be understood that the embodiments of the present disclosure are not limited to the precise structures that have been described above and shown in the drawings, and various modifications and changes may be made without departing from the scope thereof. The scope of the embodiments of the present disclosure is limited only by the append claims.

### Industrial practicability

**In** the method of the present disclosure, the user equipment reports the radio frequency capability in the first state by transmitting the capability information to the network device, so that the network device may know the radio frequency capability of the user equipment in the first state, which is beneficial for the network device to make more reasonable scheduling in combination with the state of the user equipment, thus exerting the radio frequency performance of the user equipment in the relevant state.

## Claims

1. A method for transmitting capability information, performed by user equipment, comprising:
transmitting capability information to a network device, wherein the capability information comprises a radio frequency capability of the user equipment in a first state.

2. The method according to claim 1, wherein the capability information further comprises a radio frequency capability of the user equipment in a second state.

3. The method according to claim 1, wherein transmitting the capability information to the network device comprises:
transmitting first capability information and second capability information to the network device, wherein the first capability information comprises the radio frequency capability of the user equipment in the first state, and the second capability information comprises the radio frequency capability of the user equipment in the second state.

4. The method according to any one of claims 1-3, wherein transmitting the capability information to the network device comprises:
transmitting the capability information to the network device in a case that a type of the user equipment is a first type,
wherein a state of the user equipment of the first type comprises the first state and the second state.

5. The method according to claim 4, further comprising:
transmitting first indication information to the network device, wherein the first indication information indicates the type of the user equipment.

6. The method according to claim 1, further comprising:
transmitting second indication information to the network device, wherein the second indication information indicates a state of the user equipment.

7. The method according to claim 6, wherein transmitting the second indication information to the network device comprises:
transmitting the second indication information to the network device in a case that the state of the user equipment changes.

8. The method according to claim 6, wherein transmitting the second indication information to the network device comprises:
transmitting the second indication information to the network device in a case that an uplink channel environment and/or an uplink traffic volume do not meet conditions.

9. The method according to claim 6, wherein transmitting the capability information to the network device comprises:
transmitting the capability information to the network device in a case of transmitting the second indication information.

10. The method according to any one of claims 1-9, wherein the radio frequency capability comprises at least one of:
a numeric count of uplink multiple input multiple output (MIMO) layers supported by the user equipment;
a numeric count of downlink MIMO layers supported by the user equipment; or
an uplink power class supported by the user equipment.

11. A method for receiving capability information, performed by a network device, comprising:
receiving capability information transmitted by user equipment, wherein the capability information comprises a corresponding radio frequency capability of the user equipment in a first state; and
performing scheduling according to the capability information.

12. The method according to claim 11, wherein receiving the capability information transmitted by the user equipment comprises:
receiving first capability information and second capability information transmitted by the user equipment, wherein the first capability information comprises the radio frequency capability of the user equipment in the first state, and the second capability information comprises a radio frequency capability of the user equipment in a second state.

13. The method according to claim 11, further comprising:
receiving first indication information transmitted by the user equipment, wherein the first indication information indicates a type of the user equipment.

14. The method according to claim 13, wherein receiving the capability information transmitted by the user equipment comprises:
receiving the capability information in a case that the type of the user equipment is a first type, according to the first indication information.

15. The method according to any one of claims 11-14, further comprising:
receiving second indication information transmitted by the user equipment, wherein the second indication information indicates a state of the user equipment.

16. The method according to claim 15, wherein performing scheduling according to the capability information comprises:
in a case of receiving the second indication information, determining a radio frequency capability corresponding to the state of the user equipment according to the second indication information and the capability information; and
determining configuration information according to the radio frequency capability corresponding to the state of the user equipment.

17. The method according to any one of claims 11-16, wherein the radio frequency capability comprises at least one of:
a numeric count of uplink MIMO layers supported by the user equipment;
a numeric count of downlink MIMO layers supported by the user equipment; or
an uplink power class supported by the user equipment.

18. A device for transmitting capability information, configured in user equipment, comprising:
a transceiving module configured to transmit capability information to a network device, wherein the capability information comprises a radio frequency capability of the user equipment in a first state.

19. A device for receiving capability information, configured in a network device, comprising:
a transceiving module configured to receive capability information transmitted by user equipment, wherein the capability information comprises a corresponding radio frequency capability of the user equipment in a first state; and
a processing module configured to perform scheduling according to the capability information.

20. A communication device, comprising a processor and a memory, wherein,
the memory is configured to store computer programs; and
the processor is configured to execute the computer programs to realize the method according to any one of claims 1-10.

21. A communication device, comprising a processor and a memory, wherein
the memory is configured to store computer programs; and
the processor is configured to execute the computer programs to realize the method according to any one of claims 11-17.

22. A computer-readable storage medium, storing instructions therein, which, when called for execution on a computer, cause the computer to perform the method according to any one of claims 1-10.

23. A computer-readable storage medium, storing instructions therein, which, when called for execution on a computer, cause the computer to perform the method according to any one of claims 11-17.
